Europäisches Patentamt

(19) European Patent Office

Office européen des brevets

(11) Publication number: 0 380 273
A1

# EUROPEAN PATENT APPLICATION

(21) Application number: 90300640.1

(22) Date of filing: 22.01.90

(51) Int. Cl.⁵: B01J 41/04, B01J 41/14

(30) Priority: 23.01.89 US 299198

(43) Date of publication of application:
01.08.90 Bulletin 90/31

(84) Designated Contracting States:
DE FR GB IT

(71) Applicant: THE DOW CHEMICAL COMPANY
2030 Dow Center Abbott Road
Midland, MI 48640(US)

(72) Inventor: Lindy, Lowell B.
4516 Linden Drive
Midland, Michigan 48640(US)

(74) Representative: Burford, Anthony Frederick et
al
W.H. Beck, Greener & Co. 7 Stone Buildings
Lincoln's Inn
London WC2A 3SZ(GB)

(54) Reduction of leachables from type II anion exchange resins.

(57) Decomposition products released during use or storage from a strong base, Type II anion exchange resin in the hydroxide form are produced by reacting either the chloride form or the sulfate form of the resin with bisulfite salt before conversion of the resin to the hydroxide form.

EP 0 380 273 A1

## REDUCTION OF LEACHABLES FROM TYPE II ANION EXCHANGE RESINS

This invention relates to a process for preparing a strong base, Type II anion exchange resin in the hydroxide form, and it also relates to the resin prepared by this method.

Strongly basic, Type II quaternary ammonium resins are used primarily for water treatment applications, often in mixed bed ion exchange units. Examples of water treatment applications include the following: (1) dealkalizing softened water for make-up to boiler feeds and cooling towers, (2) reducing sulfate or nitrate in water supplies, (3) deionizing water supplies, and (4) removing oxygen from deionized water.

Type II resins in the chloride form typically exhibit excellent stability. Unfortunately, Type II resins regenerated with caustic and used in the hydroxide form are inherently less stable than Type II resins in the chloride form or strong base Type I resins, and therefore are often limited to certain applications requiring temperatures no greater than ambient. The decrease in stability for the hydroxide form resins has been linked to the release of decomposition products, primarily acetaldehyde, during use or storage. See, for example, Water Quality Association's Draft Response to the Environmental Protection Agency, August 28, 1987.

For users who regenerate with caustic, the choice between using a Type II resin in the hydroxide form or a strong base Type I resin for water treatment often depends on economics and the particular application. Type II resins offer greater ease of regeneration than Type I resins, but their regeneration efficiency can be counterbalanced by their relative chemical instability. Therefore, the preparation of a Type II resin in the hydroxide form that exhibits excellent stability during use or storage would overcome a significant disadvantage that these resins currently possess.

The present invention relates to a process for preparing a strong base, Type II anion exchange resin in the hydroxide form having excellent stability during use or storage. This process comprises the step of contacting either the chloride form or the sulfate form of a strong base, Type II anion exchange resin with an effective amount of a bisulfite salt before conversion of the resin to the hydroxide form.

The invention also relates to the strong base, Type II anion exchange resin prepared from the process.

The invention also relates to a process for reducing the concentration of decomposition products released during use or storage from a strong base, Type II anion exchange resin in the hydroxide form.

Surprisingly, resins prepared from the process of this invention release an acceptably low concentration of decomposition products, such as acetaldehyde, during storage or regeneration with an aqueous base such as caustic. Additionally, the release of decomposition products remains low after numerous regeneration cycles.

The resins prepared from the process of this invention can be used in those applications where strong base, Type II anion exchange resins in the hydroxide form are used. For example, the resins are particularly useful for deionizing water in mixed bed units for the preparation of ultrapure water and for demineralizing aqueous sugar solutions such as high fructose corn syrup.

Figure 1 is a plot showing the relationship between absorbance of UV light in an aqueous acetaldehyde solution treated with Nessler's reagent and concentration of acetaldehyde in solution.

Figure 2 is a plot showing the relationship between concentration of acetaldehyde released from a Type II resin in the hydroxide form into an aqueous solution and amount of bisulfite used to treat the resin.

Figure 3 is a plot showing the relationship between concentration of acetaldehyde released from a Type II resin in the hydroxide form into an aqueous solution and batchwise contact time of bisulfite treatment.

Figure 4 is a plot showing the relationship between concentration of acetaldehyde released from a Type II resin in the hydroxide form into an aqueous solution and continuous contact time of bisulfite treatment.

Strong base, Type II anion exchange resins are known and described in Kirk-Othmer, Encyclopedia of Chemical Technology, 3rd ed., Vol. 13, pp. 678-705 and Paterson, An Introduction to Ion Exchange, pp. 12-13, Heyden & Son Ltd., Great Britain (1970). Examples of commercially available Type II resins include Dowex™ SAR gel resin, Dowex™ 22 macroporous resin and Dowex™ MSA-2 macroporous resin from The Dow Chemical Company; and Amberlite™ IRA-410 gel resin and Amberlite™ 910 macroporous resin from Rohm and Haas Company. The resins are preferably prepared by reacting chloromethylated copolymer beads with dimethylethanolamine to prepare a quaternary ammonium resin in the chloride form. Alternatively, the resins can be prepared by reacting the chloromethylated copolymer beads with other ethanolamines such as diethanolmethylamine, triethanolamine, diethylethanolamine or diethanolethylamine. Although treating the chloride form of the resin is most advantageous and economical, the sulfate form of the resin, which can be prepared by contacting the resin in the chloride form with an aqueous solution of sulfuric acid, can be treated using the process of this invention to significantly reduce the release of decomposition products during use or storage.

The copolymer beads are preferably crosslinked copolymer beads of a monovinyl aromatic monomer and a polyvinyl aromatic monomer. The preferred copolymer beads are a copolymer of up to 99.75 weight percent styrene with the balance divinylbenzene (commercially available divinylbenzene containing less than 45 weight percent ethylvinylbenzene).

Decomposition products are impurities released from the resin into the process stream or the storage medium, which is typically water. The impurities adversely affect the treated process stream for the desired application. The primary impurity is acetaldehyde, although other impurities may be advantageously treated by the method of this invention.

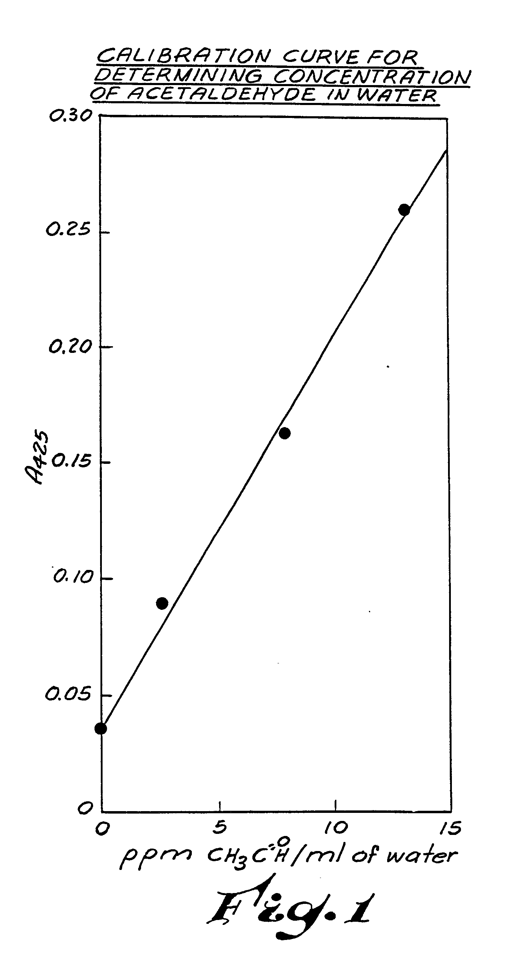

Concentration of impurities in a process stream can be measured by following the procedures described in ASTM Standard D 1426, Method B (Direct Nesslerization). For purposes of describing this invention, a calibration curve for measuring acetaldehyde concentration in water is prepared by first mixing 0.1 milliliters (ml) Nessler's reagent with 5.0 ml of a solution with varying concentrations of acetaldehyde. The mixture is allowed to stand for 10-15 minutes, and then the absorbance is measured at a wavelength of 425 nm (A425nm) using a Perkin-Elmer Lambda 4B UV/VIS Spectrophotometer. The relationship between the absorbance of the aqueous solution and the acetaldehyde (AA) concentration is shown in Figure 1. The calibration curve is a straight line having the equation:

ppm AA/ml solution = 60(A425) - 2

Bisulfite salts which can be used in the present invention include alkali or alkaline earth metal bisulfite and ammonium bisulfite. Sodium bisulfite is most preferred. The bisulfite salt is preferably used in an amount of from 0.02 to 0.20 gram bisulfite per gram resin, more preferably from 0.05 to 0.15 gram bisulfite per gram resin, most preferably from 0.10 to 0.15 gram bisulfite per gram resin.

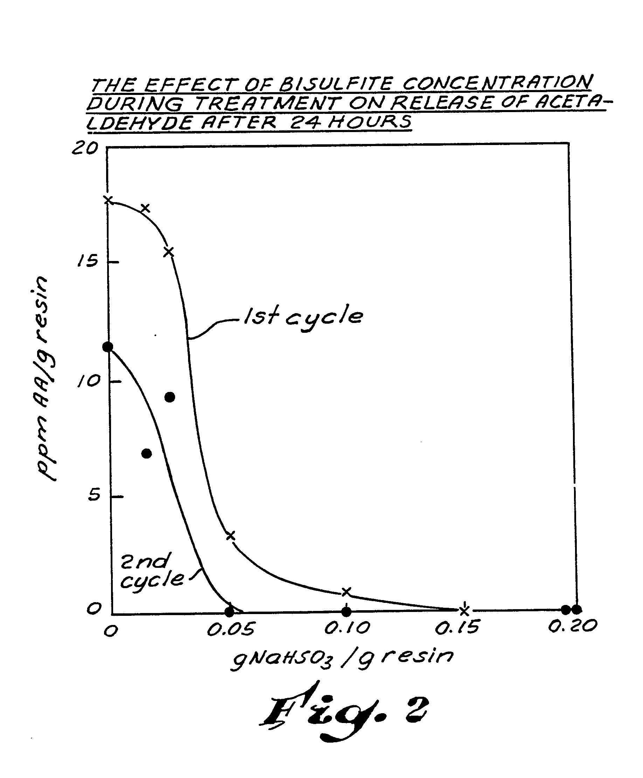

An effective amount of bisulfite salt to react with either the chloride form or the sulfate form of the resin so as to reduce the concentration of decomposition products released during use is illustrated dramatically in Figure 2. The data for Figure 2 was generated by treating 20 grams (g) of Dowex™ SAR Type II gel resin in the chloride form with varying levels of sodium bisulfite in 100 milliliters (ml) of deionized (DI) water for two hours at room temperature. For the first cycle, the resin was given a brief water wash, converted to the hydroxide form by passing 500 ml of 1N sodium hydroxide through the resin bed in one hour, and then washing with 500 ml of DI water for 15 minutes. The treated resin was stored in 100 ml of DI water and the concentration of acetaldehyde released into the water was measured after 24 hours. For the second cycle, the resin was once again washed with 500 ml DI water, stored in 100 ml of DI water, and then measured for acetaldehyde release. As illustrated in Figure 2, a significant reduction in concentration of acetaldehyde in the water, and therefore a significant reduction in the amount of decomposition products released from the resin during storage, is achieved at 0.05 g bisulfite/g resin, with the best results at greater than or equal to 0.10 g bisulfite/g resin. As illustrated in Figure 2, the effects of the bisulfite treatment become even more dramatic after each cycle.

The contact between the bisulfite salt and the resin can occur in any fashion that promotes sufficient contact between the salt and the resin. For example, the contact can occur in a batchwise manner or it can occur continuously in a packed column.

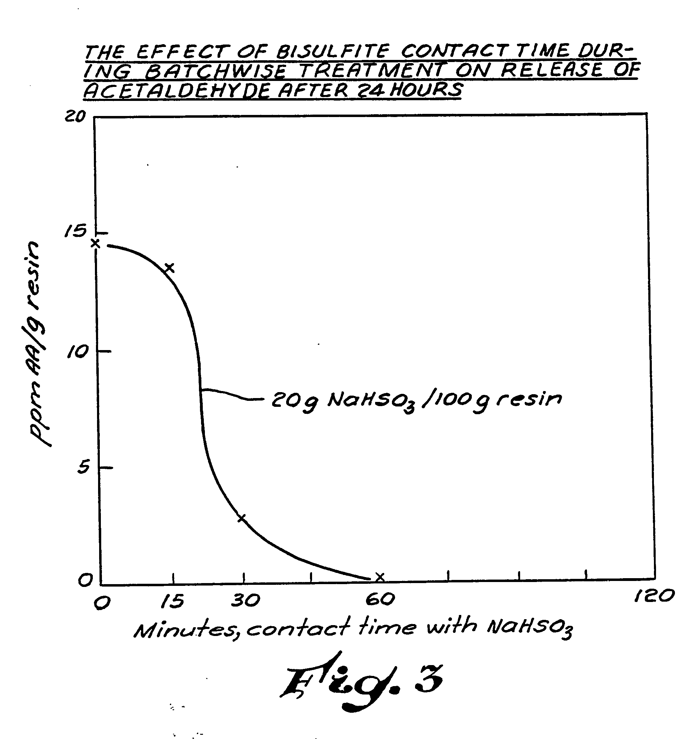

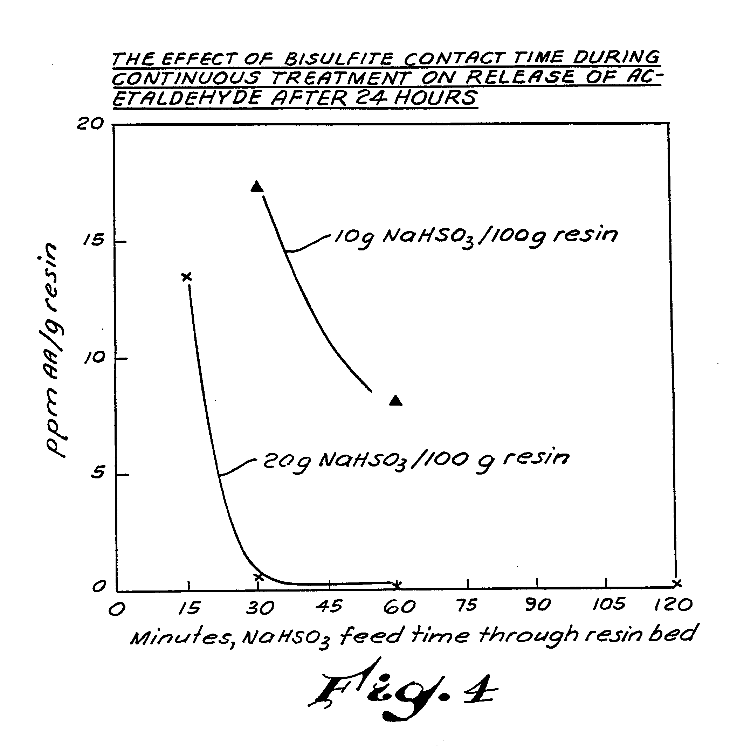

Unexpectedly, the time required for the contact sof the bisulfite salt with either the chloride form or the sulfate form of the resin is longer than what is required to merely convert a plurality of the active ion exchange sites to bisulfite ions. A preferable contact time is at least 30 minutes, more preferably at least 60 minutes, for the reaction to occur and for the resin in the hydroxide form to release reduced concentrations of impurities during use or storage. This is shown in Figures 3 and 4.

The data for Figure 3 was generated by the following steps: (1) treating in a batchwise manner 20 g of Dowex™ SAR Type II gel resin in the chloride form with 4.0 g sodium bisulfite in 100 ml water for varying contact times, (2) washing the treated resin rapidly with 500 ml of DI water, (3) converting the treated resin to the hydroxide form by passing chromatographically 500 ml of 1N sodium hydroxide through a bed of the resin in one hour, (4) washing the converted resin with 500 ml of PI water and storing the resin in 100 ml of DI water, and then (5) measuring the concentration of acetaldehyde released into the water after 24 hours.

The data for Figure 4 was generated in a manner similar to the procedure described for generating the data for Figure 3, except the chloride form of the resin was treated with sodium bisulfite continuously in a packed column, and the contact time was varied by controlling the flow rate of bisulfite solution through the column.

In order to promote intimate contact between the bisulfite salt and the resin, the bisulfite salt is preferably contacted with the resin as an aqueous solution. The concentration of the salt in water advantageously ranges from 2 to 8 weight percent, preferably from 4 to 8 weight percent. The contact temperature can range anywhere between room temperature and 80°C. Temperatures greater than 80°C may cause the resin to degrade or decompose, and temperatures below room temperature are inconvenient.

Once either the chloride form or the sulfate form of the resin has been effectively treated with a bisulfite salt, it can be converted to the hydroxide form in any conventional manner for converting chloride-form resins to hydroxide-form resins. For example, the resin can be contacted for a sufficient time with an aqueous solution of an alkali or alkaline earth metal hydroxide, preferably caustic, at a concentration advantageously between 1 and 5N, preferably between 1 and 2N.

The present invention will be further described with reference to the following examples.

Examples

Example 1

For each of two runs, 20 grams (g) of a styrene/divinylbenzene gel copolymer functionalized with dimethylethanolamine, sold commercially by The Dow Chemical Company as Dowex™ SAR, in the chloride form, was treated with 100 milliliters (ml) of an aqueous solution containing 4.0 g sodium bisulfite at room temperature for 2 hours. The resin is washed in a column with 500 ml of DI water.

For the first run, 300 ml of 1N sodium hydroxide was passed chromatographically through the resin bed to convert the resin to the hydroxide form. For the second run, the resin was converted to the hydroxide form by allowing the resin to stand in the to caustic solution in a batchwise conversion.

Following conversion to the hydroxide form, the resin was rinsed with 500 ml of DI water and stored in a bottle containing 100 ml of DI water. The concentration of acetaldehyde in the bottle of water after 24 and 48 hours was determined by following the procedures described in ASTM Standard D 1426, Method B (Direct Nesslerization). A sample aliquot was removed from the bottle and the acetaldehyde concentration was determined photometrically from the calibration curve shown in Figure 1 by using 0.1 ml Nessler reagent per 5.0 ml of solution.

The acetaldehyde concentration for each run is shown in Table 1. The first and second runs are designated Sample Nos. 1 and 2, respectively. For comparison, the acetaldehyde released from a Dowex SAR resin in the hydroxide form which was not treated with bisulfite is also shown in Table 1 and is designated as Control No. 1.

TABLE I

| Acetaldehyde Release From Resin After Treatment with NaHSO$_3$ at Room Temperature | | |
|---|---|---|
| Sample No. | Concentration Acetaldehyde, ppm/g resin | |
| | After 24 hrs. | After 48 hrs. |
| Control 1 (no treatment) | 9.8 | 14.6 |
| 1 | undetectable | undetectable |
| 2 | undetectable | undetectable |

The data in Table I indicates that treating the resin with sodium bisulfite at room temperature before conversion to the hydroxide form reduces the release of acetaldehyde to undetectable levels when the treated resin is placed in water.

Example 2

The procedure described in the first run of Example 1 was repeated, except Dowex™ SAR resin was replaced with a styrene/divinylbenzene macroporous copolymer functionalized with dimethylethanolamine, sold commercially by The Dow Chemical Company as Dowex™ 22.

4

The acetaldehyde concentration for the third run is shown in Table II. The third run is designated Sample No. 3. For comparison, the acetaldehyde released from a Dowex™ 22 resin in the hydroxide form which was not treated with bisulfite is also shown in Table II and is designated as Control No. 2.

TABLE II

| Acetaldehyde Release from Resin After Treatment with $NaHSO_3$ at Room Temperature | | |
|---|---|---|
| Sample No. | Acetaldehyde Concentration ppm/g Resin | |
| | After 29 hours | After 73 hours |
| Control 2 (no treatment) | 11.0 | 23.9 |
| 3 | 3.5 | 10.1 |

The data in Table II indicates that treating the resin with sodium bisulfite at room temperature before conversion to the hydroxide form reduces the release of acetaldehyde when the treated resin is placed in water.

Example 3

For each of two additional runs, the procedure of Example 1 was repeated, except the bisulfite treatment was carried out at 60°C instead of at room temperature. The acetaldehyde concentration in the bottle of water after 24 and 48 hours was undetectable.

Example 4

Twenty (20) grams of Dowex™ SAR resin in the chloride form was treated at room temperature in a column by passing 150 ml of an aqueous solution containing 4.0 g sodium bisulfite over 1 hour. The resin was washed with 500 ml of DI water over 15 minutes. Five hundred (500) milliliters of 1N sodium hydroxide was passed through the resin bed over 1 hour to convert the resin to the hydroxide form. The converted resin was washed with 500 ml of DI water over 15 minutes. The release of acetaldehyde was measured using the procedures described in Example 1. No detectable amount of acetaldehyde was measured.

**Claims**

1. A process for preparing a strong base, Type II anion exchange resin in the hydroxide form from either the chloride form or the sulfate form of a strong base, Type II anion exchange resin characterised in that said chloride or sulfate resin form is contacted with a bisulfite salt before conversion of the resin to the hydroxide form.

2. A process as claimed in Claim 1, wherein the resin is the reaction product of chloromethylated copolymer beads of a monovinyl aromatic monomer and a polyvinyl aromatic monomer with an ethanolamine.

3. A process as claimed in Claim 2, wherein the ethanolamine is dimethylethanolamine.

4. A process as claimed in Claim 2 or Claim 3, wherein the copolymer beads are a copolymer of up to 99.75 weight percent styrene with the balance divinylbenzene containing less than 45 weight percent ethylvinylbenzene.

5. A process as claimed in any one of the preceding claims, wherein the amount of bisulfite salt is 0.02 to 0.20 gram bisulfite per gram resin.

6. A process as claimed in any one of the preceding claims, wherein the bisulfite contact time is at least 30 minutes.

7. A process as claimed in any one of the preceding claims, wherein the bisulfite salt is an alkali or alkaline earth metal bisulfite or ammonium bisulfite.

8. A process as claimed in Claim 7, wherein the bisulfite salt is sodium bisulfite.

9. A process as claimed in any one of the preceding claims wherein the bisulfite salt is in the form of an aqueous solution.

10. A strong base, Type II anion exchange resin obtainable by a process as cliamed in Claim 1.

11. A process of deionizing water by passing water through a mixed bed ion exchange unit comprising a strong base, Type II anion exchange resin in the hydroxide form, characterised in that said resin is as claimed in Claim 10.

12. A process of demineralizing an aqueous sugar solution by passing said solution through a strong base, Type II anion exchange resin in the hydroxide form, characterised in that said resin is as claimed in Claim 10.

CALIBRATION CURVE FOR DETERMINING CONCENTRATION OF ACETALDEHYDE IN WATER

Fig. 1

THE EFFECT OF BISULFITE CONCENTRATION DURING TREATMENT ON RELEASE OF ACETALDEHYDE AFTER 24 HOURS

Fig. 2

THE EFFECT OF BISULFITE CONTACT TIME DUR-
ING BATCHWISE TREATMENT ON RELEASE OF
ACETALDEHYDE AFTER 24 HOURS

Fig. 3

THE EFFECT OF BISULFITE CONTACT TIME DURING CONTINUOUS TREATMENT ON RELEASE OF ACETALDEHYDE AFTER 24 HOURS

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-1 577 197 (ACTIVIT)<br>--- | | B 01 J 41/04<br>B 01 J 41/14 |
| A | DE-A-2 426 274 (VYSOKA SKOLA CHEM.-TECH.)<br>--- | | |
| A | FR-A-2 457 712 (DIA-PROSIM)<br>* Page 5; page 1, line 25 - page 2, line 6 *<br>--- | 1 | |
| A | US-A-3 458 439 (SCHMIDT)<br>* Column 3, lines 66-70; column 4, lines 60-75 *<br>--- | 1 | |
| A | CHEMICAL ABSTRACTS, vol. 84, 1975, abstract no. 41942m, Columbus, Ohio, US; J. UHER: "Application of anion exchangers in the treatment of synthetic ethanol for fermentation purposes"<br>--- | | |
| A | FR-A-2 314 213 (ROHM & HAAS)<br>* Page 3, line 37 - page 4, line 28; page 10, line 28 *<br>----- | 1-4 | TECHNICAL FIELDS SEARCHED (Int. Cl.5)<br><br>B 01 J |

The present search report has been drawn up for all claims

| Place of search | Date of completion of the search | Examiner |
|---|---|---|
| THE HAGUE | 04-04-1990 | WENDLING J.P. |